# EUROPEAN PATENT SPECIFICATION

(11) **EP 0 259 875 B1**
(45) Date of publication and mention of the grant of the patent: **10.11.1993**
(21) Application number: 87113246.0
(22) Date of filing: 10.09.1987
(51) Int. Cl.: G02F 1/133, G09G 3/36

(54) **Active matrix display devices**
Anzeigevorrichtungen mit aktiver Matrix
Dispositifs d'affichage à matrice active

(30) Priority: 11.09.1986 JP 212696/86; 11.09.1986 JP 212697/86; 25.12.1986 JP 307750/86; 12.01.1987 JP 3348/87; 17.03.1987 JP 60168/87
(43) Date of publication of application: 16.03.1988
(73) Proprietor: FUJITSU LIMITED, Kawasaki-shi, Kanagawa 211 (JP)
(72) Inventor: Oki, Ken-ichi c/o FUJITSU LIMITED Pat. Dpt., Nakahara-ku Kawasaki-shi Kanagawa 211 (JP); Kawai, Satoru c/o FUJITSU LIMITED Pat. Dpt., Nakahara-ku Kawasaki-shi Kanagawa 211 (JP); Yanai, Ken-ichi c/o FUJITSU LIMITED Pat. Dpt., Nakahara-ku Kawasaki-shi Kanagawa 211 (JP); Takahara, Kazuhiro c/o FUJITSU LIMITED Pat. Dpt., Nakahara-ku Kawasaki-shi Kanagawa 211 (JP)
(74) Representative: Sunderland, James Harry

(56) References cited:
- EP-A- 0 145 520
- EP-A- 0 193 759
- EP-A- 0 228 317
- EP-A- 0 236 168

## Description

The present invention relates to active matrix display devices, and to methods for driving such devices.

Active matrix display devices, together with dot matrix type display devices (or so-called simple matrix types), are widely used in display terminals of information processing apparatus. Liquid crystal is usually enclosed in such devices as the display medium.

In an active matrix display device, each pixel once addressed maintains an active state until a next addressing, and therefore this type of display device has advantages of avoiding reduction of contrast and angle of visibility such as would ordinarily occur with a dot matrix type display device.

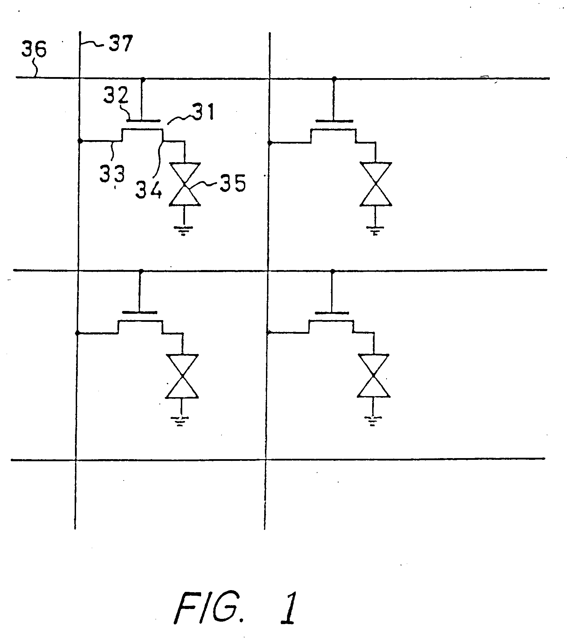

Fig. 1 schematically illustrates an equivalent circuit of a previously proposed active matrix display device. Thin film transistors (abbreviated as TFT hereinafter) are used as active switch elements. A TFT 31 has gate electrode 32, drain electrode 33, and source electrode 34. Source electrode 34 is connected to a display electrode of a liquid crystal display element 35. Scan bus lines 36 and data bus lines 37 are formed on a second transparent insulating substrate (see below) and the bus lines 36 and 37 are orthogonal one to the other.

Liquid crystal display element 35 consists of two display electrodes and liquid crystal medium held therebetween. One display electrode is formed on the second substrate and is connected to source electrode 34 of TFT 31, as mentioned above. A common earth electrode formed on a first substrate is utilized as the other display electrode. Gate electrode 32 is connected to a scan bus line 36, and drain electrode 33 is connected to a data bus line 37.

TFT 31, one display electrode of liquid crystal display element 35, scan bus line 36, and data bus line 37 are thus formed on the second substrate, for example a glass panel, whilst the common earth electrode is formed on the first substrate, and the two substrates are sealed together at their peripheral regions, spaced apart a small distance and enclosing liquid crystal medium.

By sequentially applying address pulses, having a pulse width of, for example, 30 to 60 µs to a scan bus line 36, and applying data pulses to each crossing data bus line 37 in synchronism with the address pulses, information is transmitted to each liquid crystal display element 35 arrayed in a row and is subsequently maintained in the display element for one frame period. This is explained below in more detail.

When scan bus line 36 is addressed, TFT 31, of which gate electrode 32 is connected to the scan bus line, is turned on, and thus a data voltage is impressed on liquid crystal display element 35 through data bus line 37 and TFT 31, and the electro-static capacitance of liquid crystal display element 35 is charged up. The liquid crystal display element can maintain the information represented by the charged-up voltage after TFT 31 is turned off. When the scan bus line 36 is next addressed, the liquid crystal display element 35 is newly charged up corresponding to new information.

In the active matrix display device above described, scan bus line 36 and data bus line 37 are formed, insulated from each other and orthogonal to each other, on the same substrate. Degradation of insulation or a short circuit between two bus lines at a bus line crossing point is not infrequently observed. In such a case, a display line fault, extending along a bus line, results, and fabrication yield is liable to be reduced because of the crossed bus line structure.

A step is formed in the uppermost bus line at a bus crossing point, the step having a height corresponding to the total thickness of the lower bus line and of an insulating layer. As a result, the upper bus line is liable to faults such as an increased resistance or a breakage thereof.

There are other disadvantages with the abovedescribed structure.

Because scan bus lines 36 and data bus lines 37 are formed on the same glass panel, an opening rate, which is defined as the ratio of the area of one display electrode to the area of one pixel, is reduced.

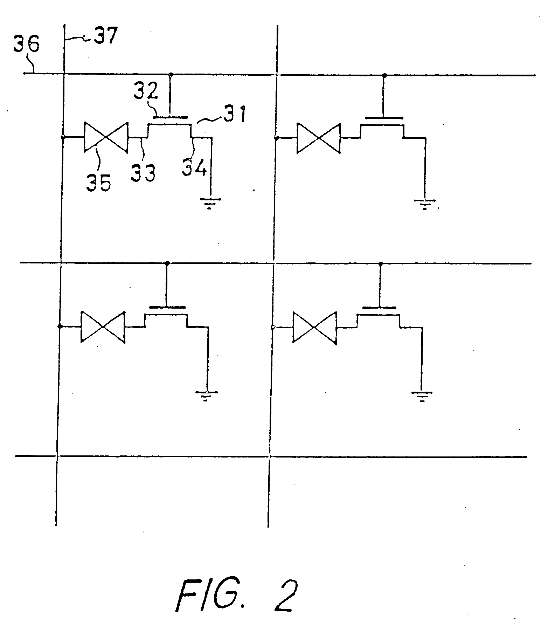

An improved structure has been proposed, disclosed in French Patent Publication No. 2,553,218 by A. Chevenas-Paule and J. Frederic-Clerc, or Japanese Patent Tokugansho 60-274011 by K. Oki, S. Kawai, et al. Fig. 2 schematically illustrates an equivalent circuit of this proposed structure. On a first glass panel, data bus line 37 is formed as a common display electrode of liquid crystal display element 35. On a second glass panel, TFT 31, scan bus line 36 and another display electrode are formed, gate electrode 32 being connected to scan bus line 36, drain electrode 33 being connected to the display electrode of liquid crystal display element 35, and source electrode 34 being connected to a common earth bus line. Liquid crystal medium is held between the two glass panels.

Though the directions of scan bus line 36 and data bus line 37 are orthogonal to one another, the lines are formed on separate panels. Therefore there is no bus crossing point problem such as is encountered in the Fig. 1 type device.

The improved structure of Fig. 2 can reduce defects caused in bus line formation and increase fabrication yield. Though this type of design eliminates bus line crossing points on one glass panel, it necessitates formation of additional earth bus lines, parallel to scan bus lines 36, on the second glass panel, source electrode 34 of TFT 31 being connected to such an earth bus line. Therefore, the opening rate cannot be increased satisfactorily.

There is thus much room for further improvement, even over the structure in which scan bus lines and data bus lines are formed on separate glass panels, for instance because earth bus lines are to be formed on the same glass panel as scan bus lines in such a case.

Attention is directed to EP-A-0 236 168 and EP-A-0 228 317 which were published after the priority dates claimed for this patent application but before the filing date of the present application.

EP-A-0 193 759 discloses an active matrix display device comprising:
first and second substrates, spaced apart, forming an enclosure with a plurality of display elements arranged in matrix;
the first substrate having data bus lines formed on the inside surface thereof, each data bus line having a strip pattern and providing a series of first display electrodes for the display elements;
the second substrate having scan bus line structures, transverse to the data bus lines, switch elements, and second display electrodes for the display elements, formed on the inside surface thereof;
each switch element having a control electrode and two controlled electrodes, the control electrode being connected to one scan bus line structure, the first controlled electrode being connected to a second display electrode, and the second controlled electrode connected to a scan bus line structure adjacent the said one scan bus line structures; and
the second controlled electrodes of the switch elements having respective separate connections to the scan bus line structures.

According to the present invention there is provided an active matrix display device comprising:
first and second substrates, spaced apart, forming an enclosure with a plurality of display elements arranged in matrix;
the first substrate having data bus lines formed on the inside surface thereof, each data bus line having a strip pattern and providing a series of first display electrodes for the display elements;
the second substrate having scan bus line structures, transverse to the data bus lines, switch elements, and second display electrodes for the display elements, formed on the inside surface thereof;
each switch element having a control electrode and two controlled electrodes, the control electrode being connected to one scan bus line structure, the first controlled electrode being connected to a second display electrode, and the second controlled electrode connected to a scan bus line structure adjacent the said one scan bus line structures; and
the second controlled electrodes of the switch elements having respective separate connections to the scan bus line structures
characterised in that
the scan bus line structures each comprise two layers providing respectively a scan bus line and an additional bus line parallel and adjacent to the scan bus line, the additional bus line being coupled to the scan bus line in an effective display area of the display device.

According to the present invention there is also provided a method of driving such an active matrix display device,
said method comprising:-
applying an address pulse to a scan bus line structure, the address pulse having a stepped pulse waveform, which has a first voltage level Vgoff, provided during a period when the present scan bus line structure is not addressed, a second voltage level Vgc, applied in temporal correspondence with addressing of a last precedingly addressed scan bus line structure, and a third voltage level Vgon for addressing the present scan bus line structure, wherein the voltage difference between the voltages Vgc and Vgoff is greater than the value of a peak-to-peak data voltage impressed on a data bus line less switch element threshold voltage.

Thus, the present invention provides active matrix display devices with structures different from that mentioned above as being disclosed in EP-A-0 193 759, and also provides a method of driving active matrix display devices which have such different structures.

An embodiment of the invention can provide an active matrix display device and a method for driving an active matrix display device, wherein manifestation of device faults during operation is minimized and highly reliable operation can be maintained.

An embodiment of the invention can provide for clarification of voltage relationships and of the waveforms used for address pulses and data pulses for obtaining good display quality.

Embodiments of the present invention provide active matrix display devices in which data bus lines are formed on a first transparent insulating substrate, such as a glass panel, and scan bus lines are formed on a second transparent insulating substrate, eliminating a grade or step crossing of both bus lines on the same panel, and also provide a method for driving the same.

An embodiment of this invention provides an active matrix display device in which earth bus lines are eliminated from the second substrate, resulting in enlargement of the relative display area per pixel (picture element) and a higher yield in panel fabrication. Further, an embodiment of this invention provides a driving method for obtaining a high quality display and reducing cross-talk problems.

Reference is made, by way of example, to the accompanying drawings, in which:
Figs. 1 and 2 are schematic equivalent circuit diagrams of previously proposed matrix display devices;
Fig. 3 is a schematic equivalent circuit diagram of a matrix display device showing waveforms related to a method of driving;
Fig. 4 is a schematic exploded perspective view of a display device;
Fig. 5 is a schematic equivalent circuit diagram relating to a double layer bus line structure of an embodiment of the present invention;
Fig. 6 is a schematic plan view of electrode and bus line arrangement on a second substrate of a device embodying the present invention;
Figs. 7 to 9 cross-sectional views, taken along lines corresponding to lines A-A', B-B' and C-C' respectively in Fig. 6, illustrating structures of embodiments of the present invention;
Fig. 10 is a schematic equivalent circuit diagram, illustrating arrangement of electrodes and bus lines, of another embodiment of the present invention;
Fig. 11 is a partial cross-sectional view illustrating bus line structure of the embodiment of Fig. 10;
Fig. 12 is a schematic plan view of a bus termination configuration of the embodiment of Fig. 10;
Fig. 13 is a cross-sectional view taken along line V-V' in Fig. 12;
Fig. 14 is a schematic equivalent circuit diagram illustrating a structure which can be applied in another embodiment of the present invention, wherein a drain electrode is connected to a scan bus line through a resistor;
Fig. 15 is a plan view of electrode and bus line arrangement which can be applied in a further embodiment of the present invention;
Fig. 16 is a schematic equivalent circuit diagram of the embodiment of Fig. 15;
Fig. 17 is a diagram illustrating voltage fluctuation between display electrodes for a non-addressed period due to impressed data pulses;
Fig. 18 is a voltage versus time chart illustrating waveforms arising during operation of a display device in accordance with a method embodying the present invention, wherein waveform (a) shows data pulses; (b) and (c) show address pulses; (d) shows source voltage; and (e) shows voltage between display electrodes;
Figs. 19 and 20 are voltage versus time charts illustrating the effects of data voltage on display electrode voltage, wherein (a) relates to a data voltage wave form which alternately reverses its polarity every horizontal scan, and (b) shows voltage variation of a display electrode on the second substrate of the relevant display device due to the data voltage change;
Fig. 21 is a schematic equivalent circuit diagram, showing also wave forms of address pulses and data pulses, for explaining a method of driving a display device which reduces uneven contrast and provides stable contrast gradient;
Fig. 22 is a graph illustrating transmissivity characteristic of a liquid crystal cell as a function of applied voltage;
Fig. 23 illustrates waveforms of data pulses, address pulses, display electrode voltage, and voltage across display electrodes, utilizing a driving method in accordance with an embodiment of the present invention;
Fig. 24 is a schematic block diagram illustrating driving circuitry for driving a display device according to an embodiment of the present invention; and
Fig. 25 is a voltage versus time chart illustrating a clock signal, shift clock pulses, shift data, and address pulses arising in the circuitry of Fig. 24.

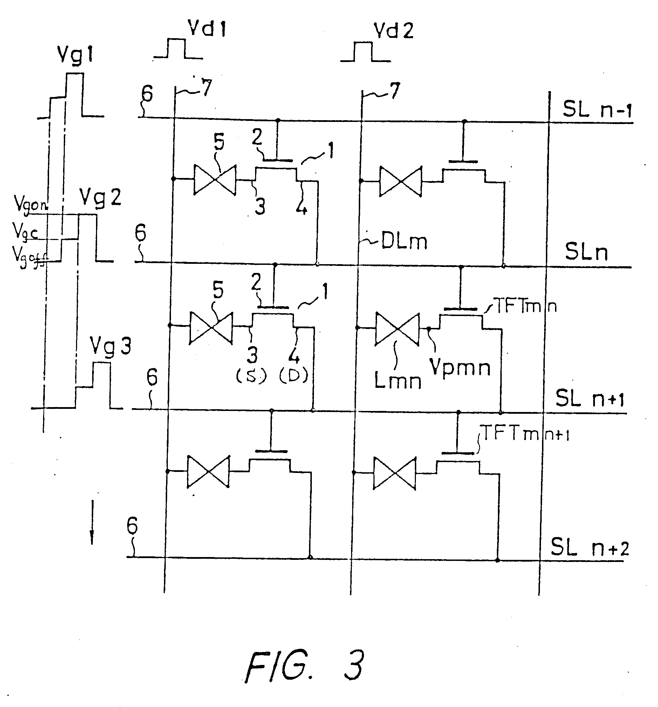

The structure of an active matrix display device will first be explained with reference to the schematic equivalent circuit diagram of Fig. 3.

Switch elements 1, such as TFTs (in positions denoted typically as TFTmn, etc.), one of the display electrodes of each liquid crystal display element 5, and scan bus lines 6 such as SLn-1, SLn, SLn+1 and SLn+2 are formed on a second substrate (see below) of the device. Data bus lines 7 (line number is denoted typically as DLm) and the other display electrode of each liquid crystal display element 5 are formed on a first substrate of the device. The control electrode 2 (gate electrode) of each TFT 1 is connected to a scan bus line 6; one controlled electrode 3 (source electrode) to the second display electrode of a liquid crystal display element 5; and another controlled electrode 4 (drain electrode) to an adjacent scan bus line 6. The two substrates are sealed together forming an enclosure and holding liquid crystal medium therebetween.

One of the substrates should be transparent. In many cases, both substrates will be transparent, for example glass panels.

The above-described configuration of the second substrate or glass panel eliminates the need for the earth bus lines of the previous proposal mentioned above, and simplifies bus line structure. This contributes to an increase of the opening rate.

In driving the display device, address pulses Vgl, Vg2 and Vg3, such as shown on the left side of Fig. 3, are sequentially impressed on scan bus lines SLn-1, SLn and SLn+1 . Each address pulse has a stepped waveform, having first and second (top) steps from a base level. Whilst a scan bus line is not addressed, it is maintained at Vgoff (base) level.

When scan bus line SLn-1 is addressed, second step level Vgon of an address pulse Vgl is impressed on control electrode 2 of switch element 1 connected to the scan bus line SLn-1 and further, at the same time, first step level Vgc of address pulse Vg2 is impressed on scan bus line SLn, and these voltage levels of address pulses are maintained for one scan period. For each scan period, each data bus line DLm is simultaneously subject to data pulses such as Vdl, Vd2, shown at the top of Fig. 3.

When the scan period of Vgon for scan bus line SLn-1 is over, control electrode 2 of switch element 1 connected to SLn-1 is driven to Vgoff and switch element 1 is turned off. However, the charged voltage Va between the two display electrodes of liquid crystal display element 5 is maintained due to an electrostatic capacitance thereof, and display element 5 is active for one frame period, until the next scan.

The reason for using the stepped waveform as address pulse is that the scan bus lines 6 have two functions: whilst one scan bus line turns on a switch element 1, the next scan bus line maintains the controlled electrode 4 of that switch element at the specified voltage Vgc during the scan period, Vgc being different from non-addressed voltage Vgoff.

The above is concerned with a basic structure of an active matrix display device.

Generally, a liquid crystal display element 5 is used in such a manner that the polarity of voltage impressed thereon is reversed with every scan.

As explained in more detail below, embodiments of the present invention provide methods of driving a display device in which the voltage of an address (scan) pulse is determined to satisfy the following relationship:

$\text{Vgc - Vgoff ≧ 2Va - Vth,}$

wherein Vth denotes the threshold voltage of a switch element 1; and Va denotes the amplitude of a data voltage.

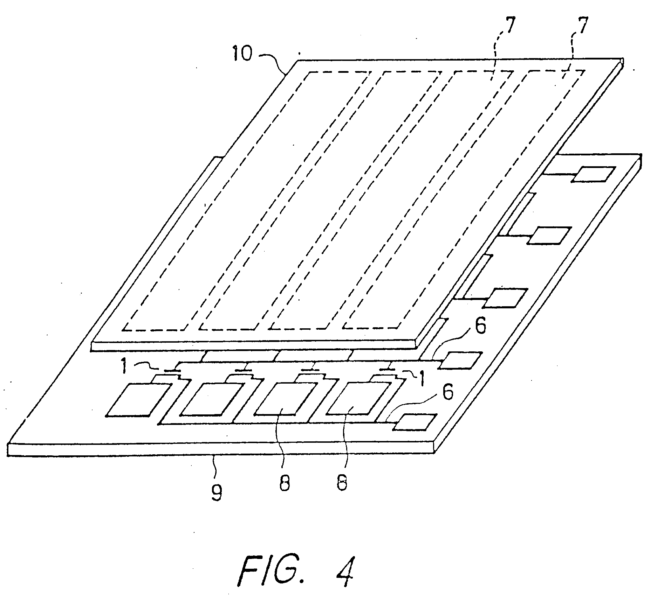

In comparison with the structure of Figs. 3 and 4, active matrix display devices embodying the present invention have modified structures of scan bus lines and the associated connection lines from switch elements (e.g. from drain electrodes) to scan bus lines as will be explained below. Scan bus lines on the second glass panel may be formed using a double layer structure sandwiching an insulating layer, and the lower and upper layers can be connected in a variety of different ways. These kinds of structure are useful to improve the characteristics of the display device and simplify the fabrication process.

With regard to the driving of the display device, embodiments of the present invention provide a method of reversing data voltage polarity with every horizontal scan, in addition to reversing it with every frame. This method helps to prevent uneven contrast and to obtain stable contrast gradient.

Returning to the structure illustrated in Fig. 3, more details can be understood taking Fig. 3 and Fig. 4 together, the latter showing an exploded perspective view of the structure of the display device.

Switch elements 1 (such as TFTs), scan bus lines 6, and display electrodes 8 (see Fig. 4) of display elements 5 are formed on a second substrate (e.g. glass panel) 9, whilst data bus lines 7 are formed on a substrate (e.g. glass panel) 10. The data bus lines function also as common display electrodes for display elements 5. Between display electrodes 8 and data bus lines 7, liquid crystal medium is held, forming display elements 5.

Connections of switch elements 1 are illustrated in Figs. 3 and 4, wherein each display electrode 8 is connected to one controlled electrode 3 of a switch element 1, control electrode 2 of each switch element 1 is connected to a scan bus line 6 (e.g SLn-1), and another controlled electrode 4 of each switch element 1 is connected to an adjacent scan bus line 6 (e.g. SLn).

In operation, a scan bus line (SLn) connected to the controlled electrode 4 of a switch element 1 is scanned just after the scanning of a scan bus line (SLn-1) to which the control electrode 2 of that switch element 1 is connected.

As seen from Fig. 4, scan bus lines 6 and data bus lines 7 are formed on separate panels 9 and 10 respectively, therefore, there is no grade or step crossing and insulation problem, resulting in an increase of production yield. Further, bus lines on the second panel are simplified, and this increases the opening rate.

For the switch elements 1 of the active matrix display device using liquid crystal medium, TFTs are, as mentioned above, generally used. In this case, again as mentioned above, the gate electrode is used as control electrode 2 of the switch element 1; the source electrode is used as one controlled electrode 3; and the drain electrode is used as another controlled electrode 4.

In the structure illustrated with reference to Figs. 3 and 4, controlled (drain) electrodes 4 are connected to scan bus lines 6. However, embodiments of the present invention are fabricated with structures which are modified in comparison with Figs. 3 and 4. Scan bus lines and so-called drain bus lines are separately formed, wherein the horizontal portions (horizontally running portions as seen in Fig. 3) of one group of bus lines can be formed on another group, forming a double layer structure. If proper connections are provided between these two groups or layers of bus lines (electrical) functions are provided just as in the embodiment of Fig. 3. The double layer structure can have the merits of enabling provision of a large opening rate, realization of a lower scan bus line resistance, and realization of redundancy in respect of the scan bus lines.

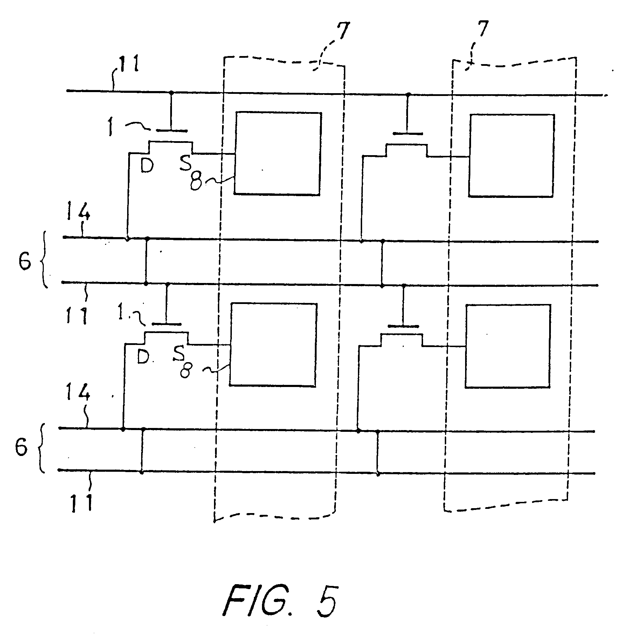

Fig. 5 is a schematic equivalent circuit diagram of a device embodying the present invention with such a double layer structure.

A drain bus line 14 as seen in Fig. 5 can be formed simultaneously together with display electrode 8, source electrode S, and drain electrode D, with an extension line there from, using transparent conductive material. On the other hand, a scan bus line 11 is subsequently formed by a metallization process, over the drain bus line, with an insulating layer therebetween. Connections between transparent conductive and metallization layers can be achieved by partial removal of the insulating layer under the scan bus line 11. The bus lines 11 and 14 together correspond in electrical function to bus line 6.

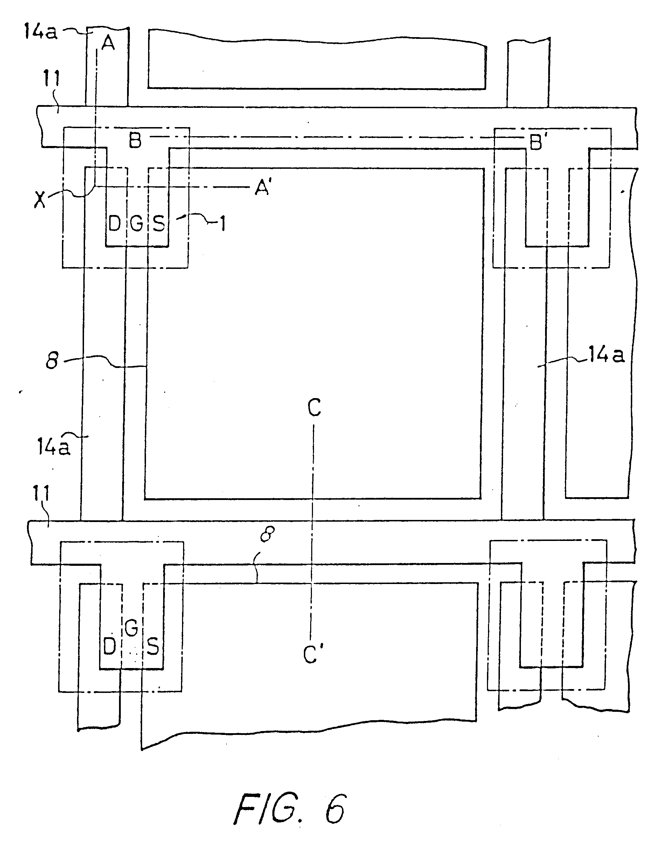

Fig. 6 is a schematic plan view of a typical and basic electrode arrangement on a second substrate or panel of a device embodying the present invention. Display electrode 8 and source electrode S are formed as a unified plane electrode, and drain electrode D and its extension line 14a are also formed as one strip-shaped electrode. All these electrodes are formed using transparent conductive material, typically ITO (Indium Tin Oxide).

The regions enclosed by chain lines in Fig. 6 are areas where TFTs are formed. On a drain electrode D and a source electrode S, amorphous silicon and insulating layers are deposited and patterned in such an area, and then a scan bus line 11, together with gate electrode G, is formed by a metallization process using for example an aluminum material. Connection between extension line 14a and a scan bus line 11 is made by directly depositing the metal layer of the scan bus line 11 concerned on the end portion of the extension line 14a concerned.

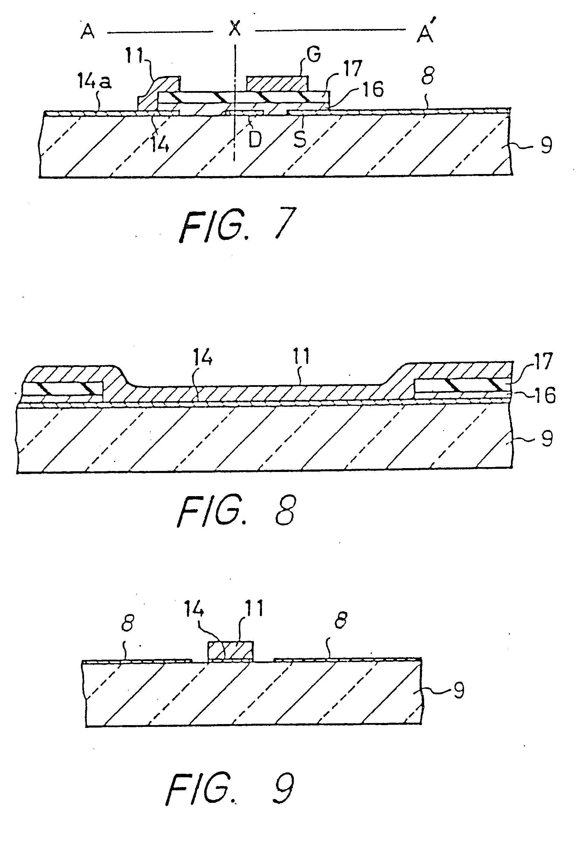

A cross-sectional view taken along right-angled chain line A-X-A' in Fig. 6 is shown in Fig. 7. As seen in Fig. 7, an amorphous silicon layer 16 deposited on drain electrode D and source electrode S, an insulating layer 17 made of silicon oxide or silicon nitride, and a gate electrode G, form a stagger-type TFT 1.

The electrode configuration on the first substrate or glass panel of the device is comparatively simple, so detailed illustration is omitted. As seen in Fig. 4, data bus lines 7 of transparent conductive material are formed on glass panel 10; the direction of the data bus lines being transverse to that of the scan bus lines 6 (11) as shown schematically in Fig. 4. Liquid crystal medium is held between display electrode 8 and data bus line 7, forming a display element.

The structure of embodiments of the present invention includes no grade or step crossing of data and scan bus lines on glass panel 9, and no separately formed earth bus line in the above-mentioned previous proposal, and therefore, a large opening rate can be obtained.

Further modifications of structure, especially with regard to the connection of an extension line 14a to a scan bus line, are provided in further active matrix display devices embodying the present invention.

In an embodiment of the present invention with a first modified structure, extension lines 14a are formed together with a drain bus line which constitutes a lower layer of a double layer structure, as illustrated in Figs. 8 and 9. Fig. 8 is a cross-sectional view corresponding to a view taken along line B-B' of Fig. 6; and Fig. 9 is a cross-sectional view corresponding to a view taken along line C-C' of Fig. 6. Drain bus line 14 is simultaneously formed and patterned together with extension line 14a. Amorphous silicon layer 16 and insulating layer 17 are removed except in areas of TFT formation. Therefore, scan bus line 11 can be formed directly on drain bus line 14 for a comparatively long distance with regard to each pixel. Scan bus line 11 and drain bus line 14 combine in function to form scan bus line 6.

Though the drain bus line 14 is formed separately from scan bus line 11 in this modified structure, it is formed within the same pattern area as scan bus line 11, forming a double layer structure. Therefore, the same opening rate as that of the device without the drain bus line can be obtained.

In fabricating the panel structure shown in Figs. 6 to 9, three stages of photolithographic patterning processing are required:
(1) patterning a transparent conductive layer for forming display electrode 8, source electrode S, drain electrode D, extension line 14a including drain bus line 14 if necessary;
(2) patterning an amorphous silicon layer 16 and an insulating layer 17 for forming TFT active regions and exposing the surface of drain bus line 14; and
(3) patterning a metal layer for forming gate electrode G and scan bus line 22.

Step (2) is necessary when a double layer scan bus line structure is used so that the two layers can be connected together for each pixel.

For an embodiment of the present invention with a second modified structure, relating to scan bus line configuration, the patterning step (2) mentioned above is omitted. Therefore, fabrication processes are simplified, requiring only two patterning steps.

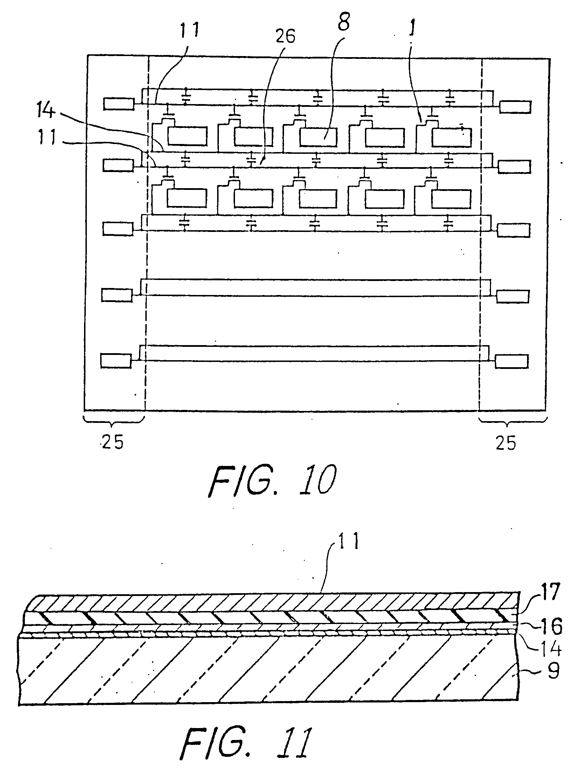

A schematic equivalent circuit diagram of a panel of a device with the second modified structure is shown in Fig. 10, wherein the same reference numerals designate the same or similar parts as above. A scan bus line 11 and drain bus line 14 (which the scan line covers) are not connected together, rather they are insulated from one another, within an effective display area on the panel. The two bus lines 11 and 14 are connected in two peripheral regions 25 of the panel, at opposite edges of the effective display area. In this case, a cross-sectional view corresponding to a view taken along line B-B' of Fig. 6 is shown in Fig. 11.

Scan bus line 11 effectively has distributed capacitances therealong, shown as capacitors 26 in Fig. 10. This configuration is characterized in that scan bus line 11 can work well, even when one bus line break off accident occurs or a connection fault at one peripheral terminal happens, because it is connected through another bus line taking a roundabout circuit.

A drain bus line 14 has a comparatively higher resistance value than a scan bus line 11, but it is coupled capacitively with a scan bus line. Drain current can flow in and flow out through capacitances 26 connected to scan bus line 11 parallel with drain bus line 14, and generation of rounded pulse waveforms can be avoided.

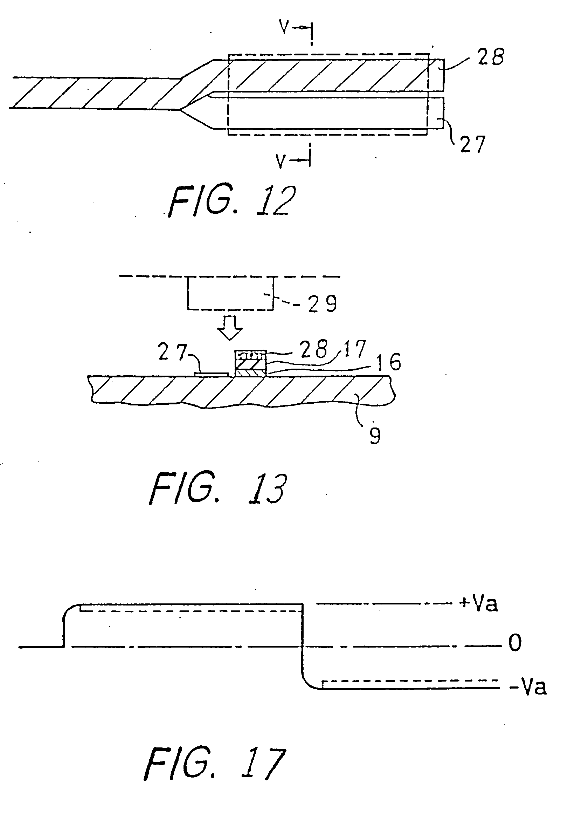

Figs. 12 and 13 illustrate the structures of scan bus line 11 and drain bus line 14 at a peripheral region of the substrate or panel. Fig. 12 is a plan view, and Fig. 13 is a cross-sectional view taken along line V-V of Fig. 12.

At the peripheral region of the panel, terminals 28 and 27 of scan bus line 11 and drain bus line 14 are branched off and their surfaces are exposed. A connector 29, shown schematically in Fig. 13, is pressed down for engagement with the terminals and is used for connecting both bus lines for receiving address pulses.

A structure of this type enables scan bus line 11 and drain bus line 14 to be connected to separate power sources for test purposes.

If peripheral regions of the substrate are covered during processing for depositing amorphous silicon layer 16 and insulating layer 17, then scan bus line 28 (11) can be directly deposited on drain bus line 27 (14) in the peripheral regions 25. In this case, connections between two bus lines are automatically completed.

Embodiments of the present invention may also use a third modified structure as explained below. When an insulation fault occurs in insulating layer 17, between gate electrode G and drain electrode D, then one scan bus line 11 connected to the gate electrode G and another scan bus line 11 connected to the drain electrode D interact with each other, and the voltage on one bus line very much influences the voltage on the other. This gives rise to a line defect in display. The third modified structure serves to limit the size or extent of the defect.

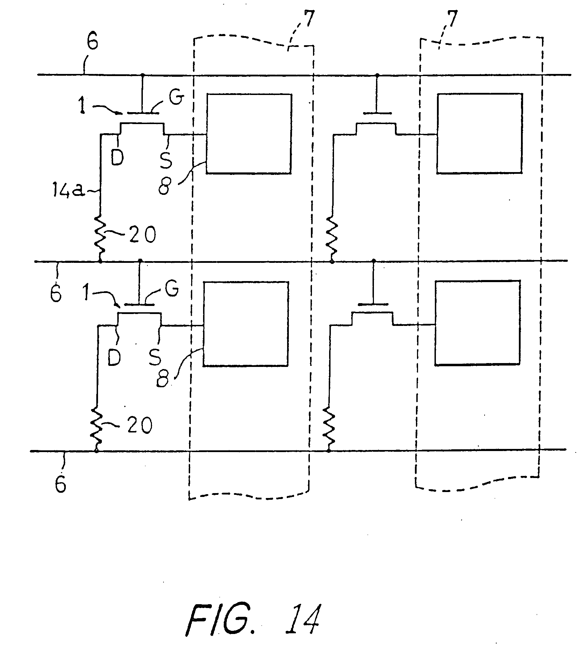

Fig. 14 is an equivalent circuit diagram for assistance in explaining the third modified structure. The structure seen in Fig. 14 is almost the same as that of Fig. 5 except that drain electrode D is connected to scan bus line 6 through a resistor 20. This resistor 20 prevents interaction, as mentioned above, between two adjacent scan bus lines. The line defect problem is alleviated: the defect is limited to a single pixel in which the TFT insulation fault occurs.

Fabrication of the structure of Fig. 14 is similar to the fabrication process shown in Figs. 6 to 9, but, as transparent conductlve material, a tin oxide (SnO₂) layer having a thickness of about 500 Å is used, deposited on the relevant glass panel. The tin oxide layer has a sheet resistivity of about 50 Kilo-ohms per square. The deposited tin oxide layer is patterned to form display electrode 8, source electrode S, drain electrode D, extension line 14a and drain bus line 14 when the double layer structure is adopted.

The extension line 14a has a high resistance, of about 1 Mega-ohms, when its dimensions are selected to provide 10 µm width and 200 µm length.

On the other hand, scan bus line 11 is formed of a metal layer, for example of aluminum, and therefore it is easy to obtain a low resistance, for example 10 Kilo-ohms, between two end terminals of the scan bus line. A resistance ratio of the scan bus line 11 to the extension line 14a of a larger than about 1:10 is sufficient for preventing the line defect mentioned above. Therefore, if the resistance value of scan bus line 11 is assumed to be 10 Kilo-ohms, a resistance value of 100 Kilo-ohms is sufficient for the extension line 14a.

When a resistance value of 1 Mega-ohm is adopted for the extension line 14a, a change of address pulse voltage, applied to a scan bus line having a TFT insulation fault, can be maintained within 1% of normal voltage, and therefore, only the single pixel the TFT of which has the insulation fault does not work well.

In this structure, display electrode 8 is also formed of tin oxide layer having a high sheet resistivity. However, this does not present a serious problem, because resistance value less than 10 Mega-ohms is sufficient to charge up the capacitance between two display electrodes within an addressing period, when capacitance is assumed to be 1 pF.

Embodiments of the present invention may employ a fourth modified structure, as explained below.

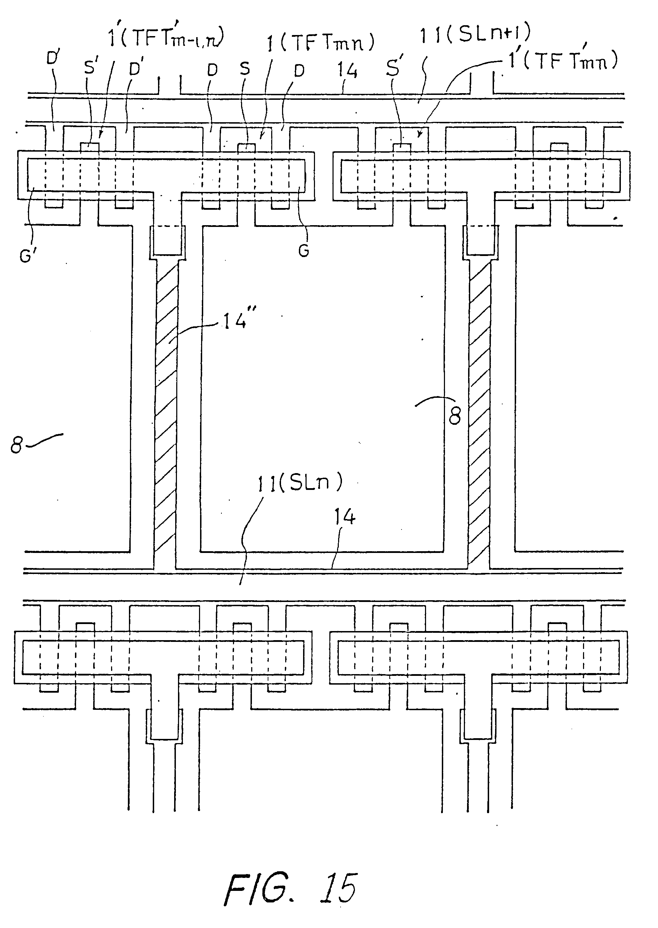

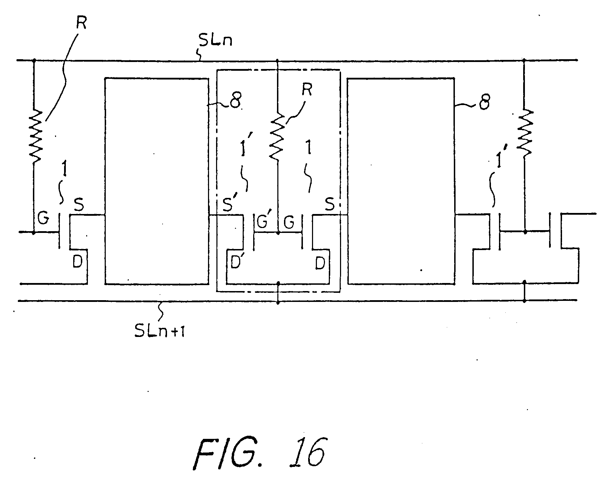

Fig. 15 is a plan view of an electrode configuration offering two TFTs, 1 and 1', per pixel. This configuration has the merit of providing redundancy for the display device. A schematic equivalent circuit of the structure is shown n Fig. 16.

Each display electrode 8 is connected to two source electrodes S and S', of TFTs 1 and 1' respectively. The two TFTs are complementary to each other. When either one of the TFTs has a defect, the other TFT works effectively. The electrode configuration offering redundancy such as shown in Fig. 15 can be realized by a simple bus line arrangement without crossovers on a substrate or panel. Scan bus line 11 (SLn, SLn+1) is connected to drain electrodes D, D' through lower bus line 14. Further, neighboring gate electrodes G and G' are connected to the adjacent scan bus line through extension line 14''.

Scan bus line 11 is provided by a metal layer and forms a double layer with lower bus line 14 provided of transparent conductive material. On the other hand, extension line 14'' formed between gate electrodes G, G' and scan bus line 11 is also made of transparent conductive material, such as ITO, and therefore it has a resistance R of for example 100 Kilo-ohms.

When any one of the TFTs of Fig. 16 has a short between gate electrode and drain electrode, short-circuit current flows between adjacent scan lines SLn and SLn+1 through the resistor R as shown in Fig. 16. As a result, drain voltages of TFTs connected to the scan line manifest a sharp change at the defective TFT and display brightness also shows a change. Therefore, it is easy to identify the defective TFT. The defective TFT can be cut off by evaporating a connecting portion, for example between its drain electrode and a scan bus line or an extension line 14'', using laser radiation through the substrate. The display device can be thus repaired and the works normally using the remaining TFTs.

Of course, the electrode configuration of this embodiment of the present invention can be modified in such a way that drain electrodes D, D' are connected to the scan bus line through a resistor R and gate electrodes G, G' are connected to an adjacent scan bus line.

A method of driving an active matrix display device, corresponding to an embodiment of the present invention, will now be explained. The equivalent circuit of Fig. 3 will be referred to.

A TFT (its position in the display matrix is represented as TFTmn) is assumed to be in an off-state when a voltage between gate electrode 2 and drain/source electrodes 3/4 is equal to or lower than 0 volts. This means that the TFT is an n-type enhancement transistor and that a threshold voltage thereof is 0 volts. To meet requirements imposed by liquid crystal characteristics, the polarity of the voltage (data voltage) applied to a display element Lmn should be reversed each time the scan bus line SLn, connected to TFTmn, is addressed. Address pulses such as Vg1, Vg2 and Vg3 shown on the left side of Fig. 3 are impressed to each scan bus line 6 sequentially synchronized with a horizontal synchronizing signal, and data pulses such as Vd1 and Vd2 shown at the top of Fig. 3 are impressed on the data bus lines 7 simultaneously for each horizontal scan period. Data voltage polarity is reversed after scanning one frame. A scan pulse has a stepped waveform having Vgoff, Vgc, and Vgon levels.

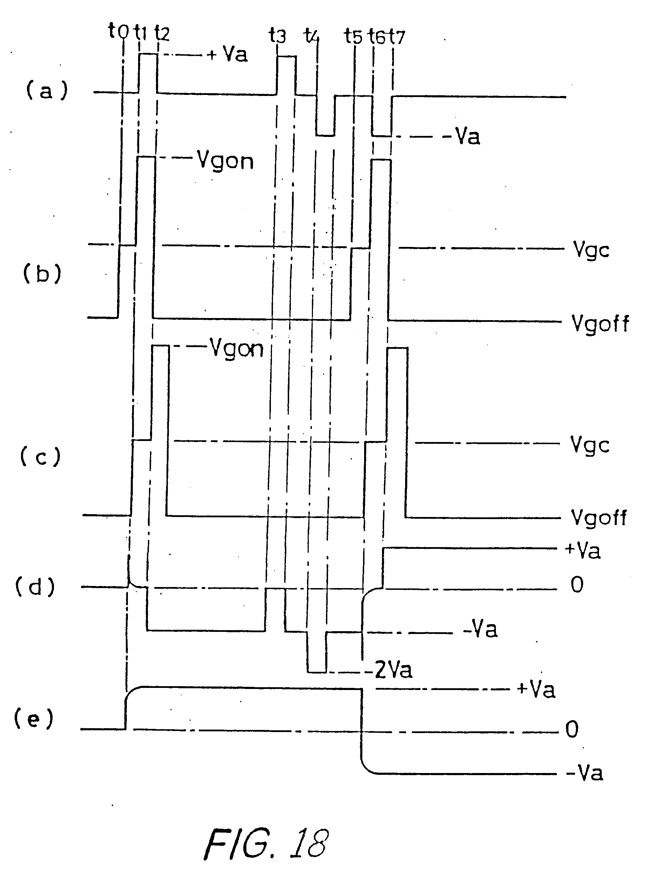

Fig. 18 is a detailed voltage versus time chart illustrating: (a) data voltage applied to data bus line DLm, (b) and (c) address pulses applied to scan bus lines SLn and SLn+1, (d) display electrode potential Vpmn applied to TFTmn (see Fig. 3), and (e) voltage across the display electrodes of display element Lmn.

Data voltage (Va) applied to TFTmn reverses its polarity (to -Va) at t6, as compared with the data voltage applied at t1. As seen in Fig. 18(a), t6-t1 corresponds to one frame period. The beginning of the first frame is not shown, but t4 represents beginning of the first pulse of the next frame.

When an address pulse as shown in Fig. 18(b) is applied, for example, to scan bus line SLn, then the address pulse as shown in Fig. 18(c) is simultaneously applied to the next scan bus line SLn+1. An address pulse has three levels as described. When TFTmn is addressed at time t1, then its gate 2, connected to scan bus line SLn, is driven to Vgon; the data bus line DLm is driven to Va; and the drain of TFTmn connected to SLn+1 is driven to Vgc. To maintain the normal operation of a display element according to an embodiment of the present invention the following voltage relationship should be satisfied at all times:

$\text{Vgc - Vgoff ≧ 2Va,}$

where threshold voltage Vth is assumed to be 0 volts.

This relationship means that regardless of the polarity of charged voltage between the display electrodes of the display element (Lmn) and of the polarity of data voltage, TFTmn is maintained in an off-state for the whole of a period in which it is non-addressed, and therefore the charged voltage between the display of the display electrodes of the displacement is maintained.

For example, if data voltages Va and -Va are selected as +5 volts and -5 volts respectively, Vgc - Vgoff should be larger than 10 volts. If Vgc is chosen as 0 volts, then Vgoff should be lower than -10 volts, for example -12 volts.

When threshold voltage Vth has a non-zero value, the above relationship is modified as follows:

$\text{Vgc - Vgoff ≧ 2Va - Vth.}$

When TFTmn of Fig. 3 is addressed at time t1, address pulses of Figs. 18(b) and 18(c) are applied to scan bus lines SLn and SLn+1 respectively, and data pulse of Fig. 18(a) is applied to data bus line DLm. Charging current flows into display element Lmn and the voltage across its display electrodes builds up. Terminal voltage (Vpmn in Fig. 3) exhibits a steep rise and a fall approaching 0 volts, as shown in 18(d), and the charged voltage across display electrodes is as shown in Fig. 18(e).

At time T2, TFTmn is turned off and the data voltage is changed to zero. Voltage at Vpmn jumps to -Va level because of capacitive coupling between the display electrode and data bus line DLm, and charged voltage across display electrodes as shown in Fig. 18(e) is maintained almost constant for the subsequent period. During a subsequent non-addressed period, data bus line DLm receives a data voltage every time another scan bus line is addressed. Therefore non-addressed display element Lmn also suffers effects of voltage changes on data bus line DLm.

However, in Fig. 18(e), charged voltage is simply shown as constant, neglecting voltage fluctuation. When a data pulse is assumed to have a waveform as shown in Fig. 18(a), wherein the pulse beginning at t3 is the final data pulse of a first frame; and a data pulse beginning at t4 is the first data pulse of the next frame, then the voltage Vpmn in Fig. 18(d) shows two changes corresponding to the two data pulses beginning at t3 and t4. At t3, Vpmn rises to 0 volts, and at t4, it drops to -2Va. It is seen that, when the polarity of data pulse changes, the maximum amplitude of Vpmn reaches to twice the data voltage. In order to maintain TFTmn in an off-state for the Vpmn change, Vgc - Vgoff ≧ 2Va is a necessary condition as described previously for normal operation of the display device.

At t6, TFTmn is addressed by the second address pulses shown in Figs. 18(b) and 18(c) respectively, and a data pulse of -Va is applied to data bus line DLm. The terminal voltage Vpmn shows a steep drop momentarily below -Va level, and approaches 0 level (Vgc) because TFTmn is conductive. The direction of charging current is opposite to that at t1. Therefore, the charged voltage between display electrodes is also reversed to -Va level at t6 as shown in Fig. 18(e).

When data voltage is negative, the gate voltage applied to take a TFT into an on-state can be lower than the voltage for a positive data voltage. Therefore, the address pulse waveform can take different shapes depending on the polarity of data pulse voltage.

An improved method of driving a display device according to an embodiment of the present invention will now be explained.

With the method explained with reference to Fig. 18, the polarity of data pulses is reversed frame by frame. Charged voltage across display electrodes as illustrated in Fig. 18(e), is represented as constant for the greater part of a non-addressed period of a display element, but in practice it is affected by data voltages applied during the non-addressed period.

Generally, in an active matrix display device effects of leakage current and capacitance between electrodes cannot be avoided. The voltage across the display electrodes fluctuates during a non-addressed period and this makes the transparency (in other word, brightness) of a pixel fluctuate. Use of data pulses of the same polarity over the whole of a frame period means that the display is more liable to suffer such effects than a method in which data pulse polarity is reversed for each horizontal scan.

A display device embodying the present invention can be driven in accordance with the above method, to maintain more correct display brightness, in which data pulses are applied in such a way that data voltage polarity is reversed from one horizontal scan to the next and the polarity for each pixel is further reversed from one frame to the next.

Even when the above method is applied, there remains some fluctuation of the voltage across display electrodes. This is illustrated in Fig. 17, which corresponds to Fig. 18(e). Fig. 17 indicates that the voltage fluctuates between the solid line and the broken line.

The electrode structure of a display device embodying the present invention may be more susceptible to data voltage changes than the structures previously proposed, because a display element is connected to scan bus lines through two capacitances in parallel, one being a gate-to-source capacitance and the other a source-to-drain capacitance.

To avoid or further mitigate fluctuation of display brightness and to keep it at or more nearly at correct values, the improved driving method embodying the present invention described below may be used.

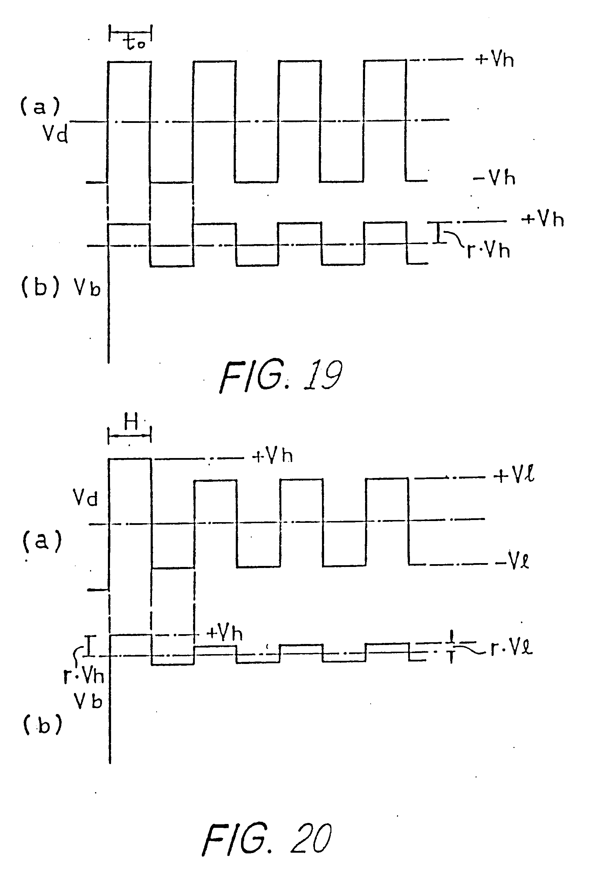

Fig. 19 shows (a) waveform Vd of alternate data pulses (b) voltage change waveform Vb across display electrodes for a specific pixel. At first, the pixel is addressed and driven to Vh or level [1] (for example, white level), and then for all of a subsequent non-addressed period, the pixel suffers the effects of alternate voltage changes to -Vh and Vh, both representing level [1]. Fig. 20 shows similar waveforms Vd and Vb except that data pulse Vd changes from Vh to -Vl and then to Vl, and then to -Vl and Vl alternately both representing [0] level (black) for the subsequent non-addressed period.

The voltage Vb suffers the effects of data pulses Vd and its waveform is as shown in Figs. 19(b) and 20(b). When r is assumed to be a factor representing the influence or effect of pulse voltage Vd on voltage Vb, less than 1, then the amplitude of Vb shows a fluctuation having an amplitude of rVh in Fig. 19(b) or rVl in Fig. 20(b).

The brightness of liquid crystal display depends on the effective voltage (Vb rms) applied across the liquid crystal display element.

For the case of Fig. 19(b), effective voltage Vb rms is given by the following equation: 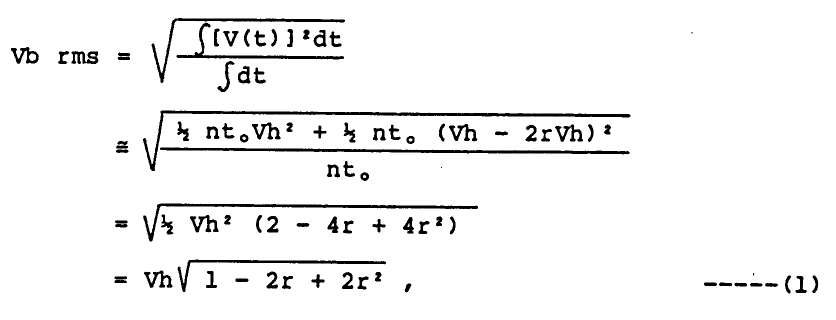
where n denotes number of scan lines; and to the time for one horizontal scan.

For the case of Fig. 20(b), the effective voltage Vb' rms is given by the following equation: 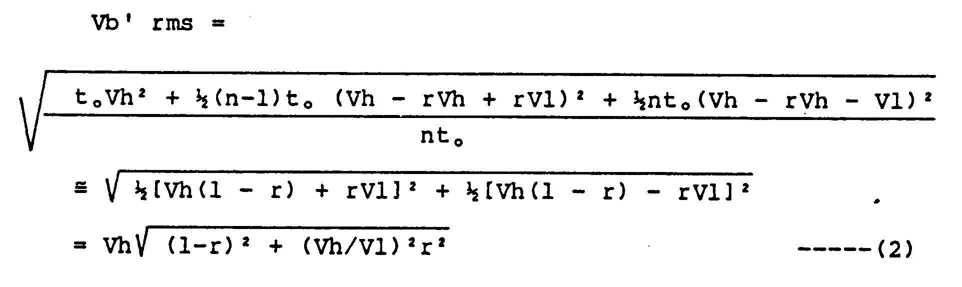
The difference Δ V rms between Vb rms and Vb' rms is given as follows: 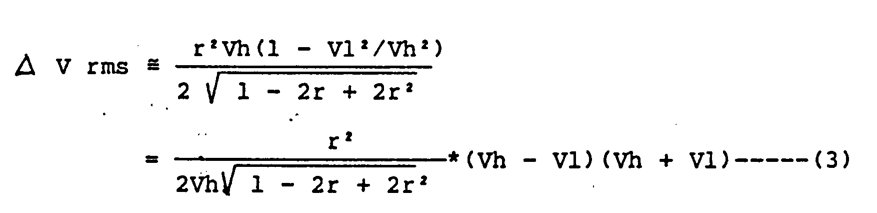
In order to obtain equal brightness the cases of both Figs. 19 and 20, the difference Δ V rms of equation (3) is to be minimized. The driving method therefor is described hereinafter.

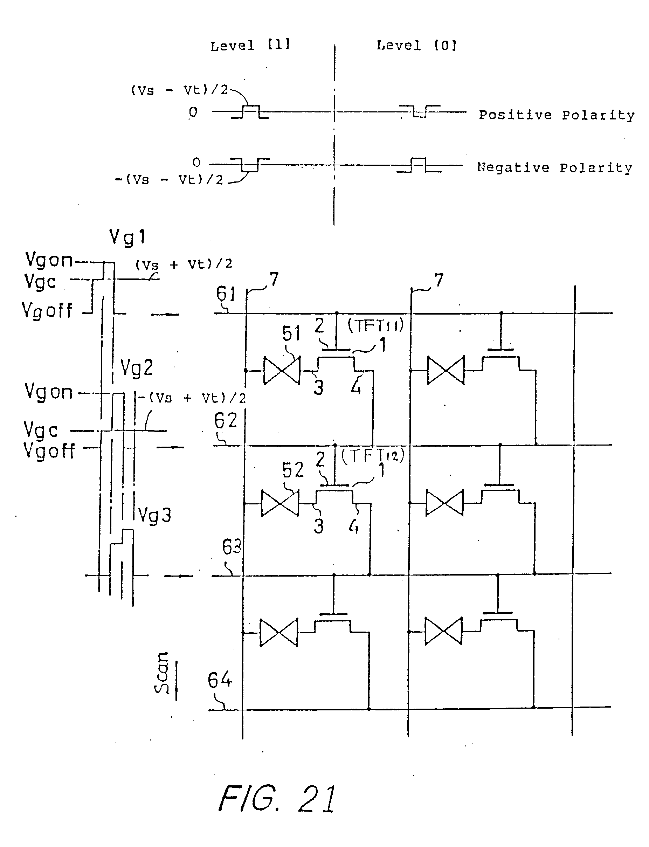

Fig. 21 shows the same equivalent circuit as Fig. 3, with waveforms of address pulses on the left and data pulses at the top, those waveforms being different from the waveforms shown in Fig. 3. In one frame, each time a scan bus line 6 of odd number is addressed, data voltage of positive polarity is applied, and each time a scan bus line of even number is addressed, data voltage of negative polarity is applied. Data voltage waveforms are illustrated for both display levels [1] and [0] for both possible polarities.

With regard to an address pulse Vg1 applied when TFT11 in Fig. 21 is addressed, pulse voltage Vgon of waveform Vg1 is impressed upon scan bus line 61 whilst the voltage of drain electrode 4 of TFT11, connected to scan bus line 62 is maintained at voltage Vgc of address pulse waveform Vg2.

The Vgc levels of address pulses differ depending on the data pulse polarity. According to the driving method of this embodiment of the present invention, the absolute value of Vgc is determined as a value between the saturation voltage and threshold voltage of a liquid crystal display element.

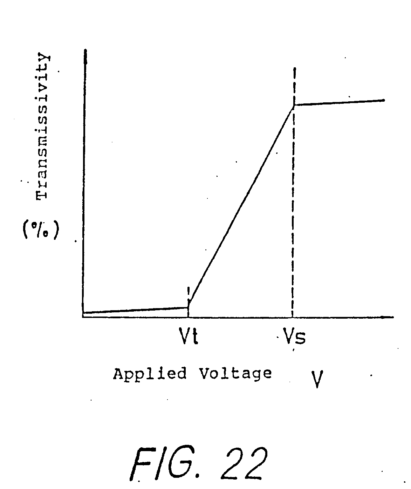

A characteristic illustrating transmissivity versus applied voltage for liquid crystal is indicated in Fig. 22. Vt denotes the threshold voltage and Vs the saturation voltage of a liquid crystal display element. In other words, it may be considered that Vs corresponds to the applied voltage of the display element for providing display level [1] and that Vt corresponds to the voltage for providing level [0].

Conditions for minimizing brightness fluctuation are explained below.

Assume that Vgc of pulse Vg1, for positive polarity data voltage in Fig. 21, is selected as (Vs + Vt)/2 and Vgc of Vg2 is selected as -(Vs-Vt)/2, for negative polarity data pulse.

Assume also that amplitudes of data pulses are selected as (Vs - Vt)/2 and -(Vs-Vt)/2 as shown at the top of Fig. 21, depending on display level ([1] or [0]) and the data voltage polarity.

When a positive (positive polarity mode) data voltage (Vs - Vt)/2, representing level [1], is applied to display element 51 in Fig. 21, and the drain of TFT11 is held at a voltage of -(Vs + Vt)/2, then the voltage across the display element 51 becomes Vs. When a positive (positive polarity mode) data voltage -(Vs - Vt)/2, representing level [0], is applied the voltage across the display element becomes -Vt.

When a negative (negative polarity mode) data voltage -(Vs - Vt)/2, representing level [1], is applied to display element 52 in Fig. 21, and the drain of TFT12 is held at voltage of (Vs + Vt)/2, the voltage across the display element becomes -Vs. When negative (negative polarity mode) data voltage (Vs - Vt)/2, representing level [0], is applied the voltage across the display element becomes -Vt.

Therefore, for data pulses representing level [1] of positive and negative polarities (positive and negative polarity modes), the display element is driven to saturation voltages Vs and -Vs respectively; and for data pulses representing level [0], it is driven to Vt and -Vt.

In this case, the difference Δ V rms of equation (3) is obtained by substituting (Vs - Vt)/2 for Vh, and -(Vs - Vt)/2 for V1 in that equation. The last term of equation (3), namely (Vh + Vl), becomes zero.

Actual waveform pattern of data pulse is different from Fig. 20(a), and it shows the waveform pattern of data pulse which begins at level [1] similarly with regard to the first pulse, however, the polarities of the second and all following pulses for non-addressed period of level [0] are reversed and their amplitudes are the same as the first pulse.

With the driving method described above data voltages have the same amplitude for both levels [1] and [0] and voltage fluctuation across the display elements is made smaller.

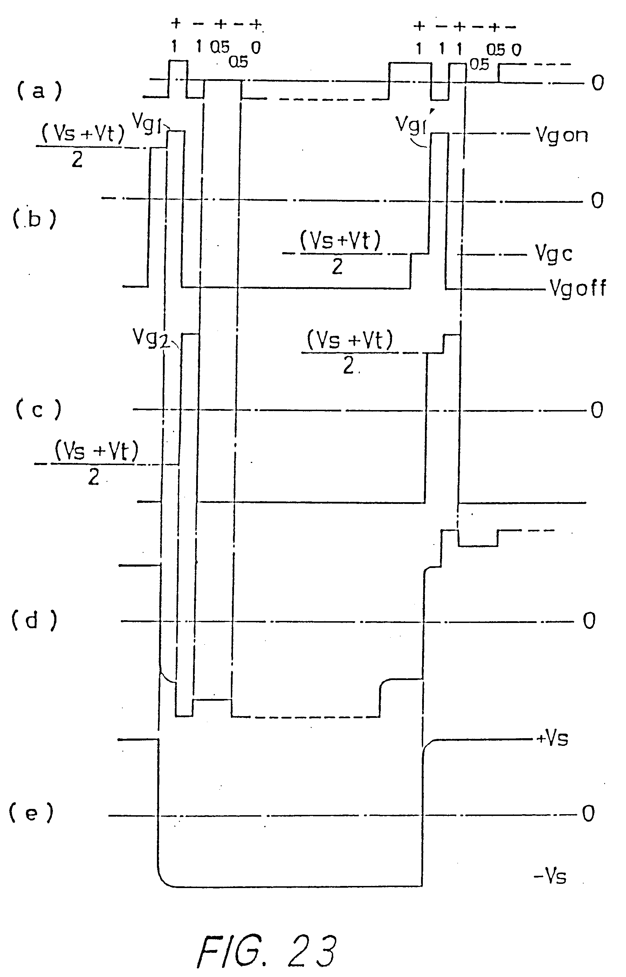

Fig. 23 is voltage versus time chart illustrating an example of the above driving method, wherein waveform (a) shows data pulses for data bus line DLm (refer to Fig. 3); (b) and (c) show address pulses for scan bus lines SLn and SLn+1; (d) shows display electrode voltage at TFTmn (Vpmn); and (e) shows voltage across display electrodes of element Lmn. Numerals +1 and -1 in Fig. 23(a) denote level [1] data for positive and negative polarities (positive and negative polarity modes) respectively. Numerals +0.5 and -0.5 denote intermediate levels between level [1] and [0] data for positive and negative polarities respectively. Numerals +0 and -0 denote level [0] data for positive and negative polarities respectively.

The amplitudes of data pulse for levels [1] and [0] are selected as (Vs - Vt)/2 or -(Vs - Vt)/2, depending on the polarity (polarity mode) as explained with reference to Fig. 21. With regard to the address pulse shown in Fig. 23(b), applied to scan bus line SLn, the first pulse Vg1 corresponds to a positive data pulse and the second pulse Vg1' corresponds to a negative data pulse applied in a next frame period.

When TFTmn is addressed by the first pulse of Vg1, its drain, connected to SLn+1, is driven to Vgc having an amplitude of -(Vs + Vt)/2, as shown in Fig. 23(c). The display Lmn element is charged with the voltage Vs, and is maintained for a subsequent frame period. This is shown in Fig. 23(e), which illustrates that the potential of the display electrode on the TFT side is negative.

Next, when scan bus line SLn+1 is addressed, a negative data pulse -(Vs - Vt)/2, representing level [1], is applied, and the drain of TFTmn+1 is driven to (Vs +Vt)/2, and the relevant display element is charged with the voltage -Vs.

For a display brightness of a middle level, between [1] and [0] levels, a data voltage is selected with a middle value between (Vs - Vt)/2 and -(Vs - Vt)/2, namely, 0 volts.

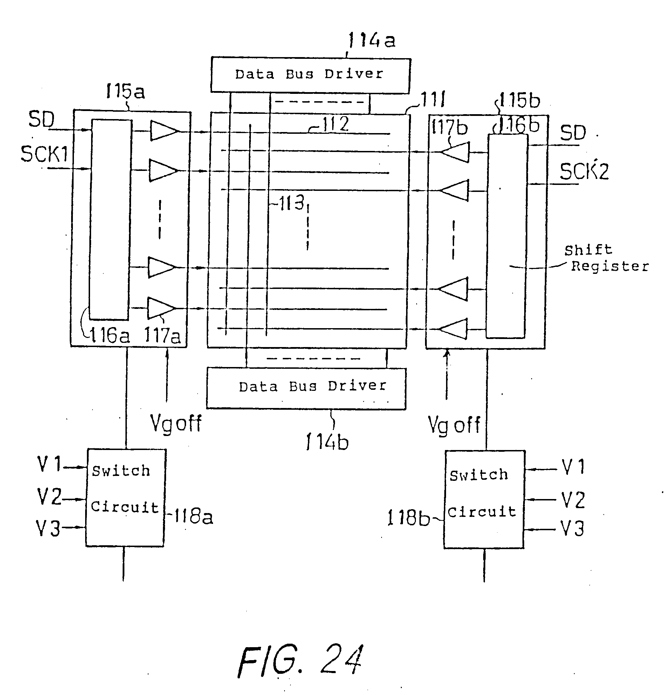

Fig. 24 is a block diagram illustrating the driving method, and circuitry for implementing the driving method, according to the above embodiment.

Scan bus lines 112 of active matrix display device 111 embodying the present invention are addressed by scan bus drivers 115a and 115b, and data pulses are applied to data bus lines 113 by data bus drivers 114a and 114b. Each scan bus driver 115a, 115b comprises a shift register 116a, 116b and a buffer amplifier 117a, 117b and is operatively connected to switching circuit 118a, 118b.

Display data corresponding to a single horizontal scan line is stored in data bus drivers 114a and 114b, and outputted to data bus lines 113 synchronized with address pulses output sequentially to scan bus lines 112 from scan bus drivers 115a and 115b. Switching circuits 118a and 118b are connected to power sources V1, V2 and V3. Vgoff is separately supplied to scan bus drivers. Vgon, which makes an active element (TFT, not shown in Fig. 24) conductive, is supplied from V1. Vgc having a voltage of (Vs + Vt)/2 is supplied from V2, and Vgc having a voltage of -(Vs + Vt)/2 is supplied from V3. These voltages are selectively switched in switching circuits 118a and 118b and output selectively to the scan bus lines 112 through buffer amplifiers 117a and 117b. The voltage sources for Vgoff are separately provided to each scan bus driver 115a, 115b, and maintain the voltage of scan bus lines at Vgoff for non-addressed periods.

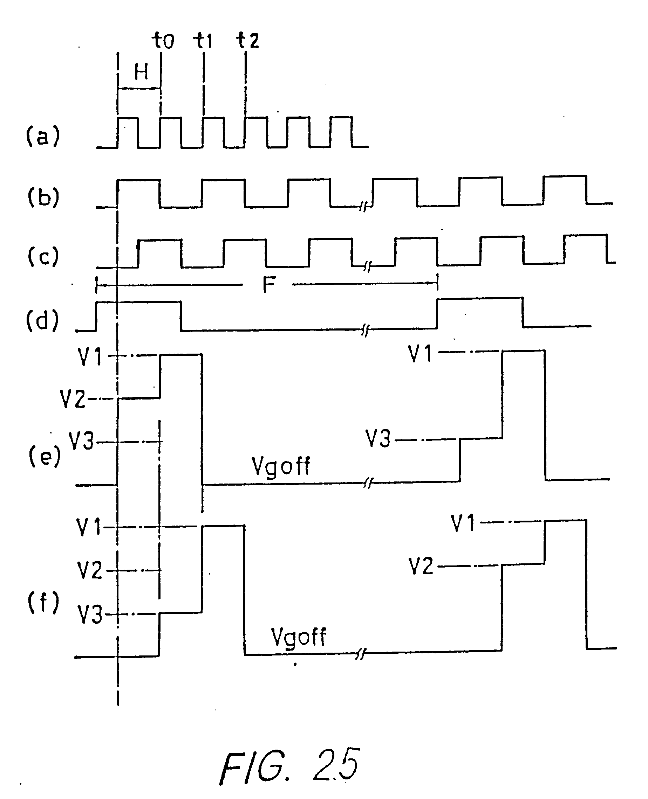

Fig. 25 is a waveform versus time chart relating to Fig. 24. In Fig. 25, waveform (a) shows a horizontal clock signal; (b) shows a first shift clock signal SCK1; (c) shows a second shift clock signal SCK2; (d) shows shift data SD and (e) and (f) show address pulses from scan bus drivers 115a and 115b respectively.

Clock signal (a) has period H which corresponds to one horizontal scan period. The first and second shift clock signals SCK1 and SCK2 have a phase difference of H/2, and shift data SD has a frame period F.

At time t0, a first scan bus line 112 is driven by V1, providing a voltage of Vgon, by scan bus driver 115a connected to switching circuit 118a, and at the same time the next scan bus line is driven by V3, providing a voltage of -(Vs + Vt)/2, by scan bus driver 115b connected to switching circuit 118b. This is shown in the region between t0 and t1 of Fig. 25(e) and (f). Data voltages of positive polarity corresponding to the fist scan bus line are also supplied to data bus lines 113 during this period.

At time t1, the first scan bus line is drive to Vgoff by scan bus driver 115a, and the second scan bus line is driven to Vgon by scan bus driver 1215b, and the third scan bus line is driven to (Vs + Vt)/2 (the waveform for the third scan bus line is not shown in the Figure) by scan bus driver 115a which is connected to V2 through switching circuit 118a. During the period between t1 and t2 of Fig. 25, data pulses of negative polarity corresponding to the second scan bus line are supplied to data bus lines 113.

Horizontal scans follow one another from top to bottom of the device 111 as seen in Fig. 24. This can be reversed by applying address pulses from bottom to top and by changing the connections of gate electrode and drain electrodes of TFTs, for example, by connecting gate electrode 2 of TFT11 to scan bus line 62 and drain electrode 4 of TFT11 to scan bus line 61 in Fig. 21.

## Claims

1. An active matrix display device comprising:
first (10) and second (9) substrates, spaced apart, forming an enclosure with a plurality of display elements arranged in matrix;
the first substrate (10) having data bus lines (7) formed on the inside surface thereof, each data bus line (7) having a strip pattern and providing a series of first display electrodes for the display elements;
the second substrate (9) having scan bus line structures (6), transverse to the data bus lines (7), switch elements (1), and second display electrodes (8) for the display elements, formed on the inside surface thereof;
each switch element (1) having a control electrode (G) and two controlled electrodes (D, S), the control electrode (G) being connected to one scan bus line structure (6), the first controlled electrode (S) being connected to a second display electrode (8), and the second controlled electrode (D) connected to a scan bus line structure (6) adjacent the said one scan bus line structure; and
the second controlled electrodes (D) of the switch elements (1) having respective separate connections to the scan bus line structures (6);
characterised in that
the scan bus line structures (6) each comprise two layers providing respectively a scan bus line (11) and an additional bus line (14) parallel and adjacent to the scan bus line (11), the additional bus line (14) being coupled to the scan bus line (11) in an effective display area of the display device.

2. A device as claimed in claim 1, wherein the enclosure includes liquid crystal.

3. A device as claimed in claim 1, 2 or 3, wherein, in each scan bus line structure, an insulating layer (17), for example of silicon oxide or silicon nitride, is formed on each additional bus line (14) and the scan bus line (11) is formed on the insulating layer.

4. A device as claimed in claim 3, wherein the additional bus line (14) is connected to the relevant scan bus line (11) of the scan bus line structure on a peripheral region of the second substrate (9).

5. A device as claimed in claim 1, 2 or 3, wherein, in each scan bus line structure, each additional bus line (14) has at least one connection to the scan bus line (11) for each display element along that scan bus line.

6. A device as claimed in any preceding claim, wherein the connection of the second controlled electrode (D) of each switch element (1) to a scan bus line structure (6) is by way of a film resistor (20), made of high sheet resistivity material, for example tin oxide.

7. A device as claimed in claim 6, wherein each film resistor (20) has a resistance more than ten times that of the total length of a scan bus line (11).

8. A device as claimed in any preceding claim, wherein the switch elements (1) are thin film transistors, each having a gate electrode (G) as the control electrode, a source electrode (S) as the first controlled electrode, and a drain electrode (D) as the second controlled electrode.

9. A device as claimed in any preceding claim, wherein the first and second display electrodes of the display elements, and connecting lines between first controlled electrodes and second display electrodes and between second controlled electrodes and scan bus line structures, are thin films of transparent and electrically conductive material, for example indium tin oxide.

10. A device as claimed in any preceding claim, wherein the scan bus lines (11) are of metal layer, for example aluminum layer.

11. A device as claimed in any preceding claim, wherein a pair of switch elements (1) are provided in respect of each display element, on the second substrate (9), the control electrodes (G) of the pair of switch elements being connected to the relevant said one scan bus line structure (6) through respective connection resistors (R).

12. A device as claimed in claim 11, wherein the control electrodes (G) of two switch elements (1) belonging to respective different such pairs are connected in common by such a connection resistor (R) to a scan bus line structure (6).

13. A method of driving an active matrix display device as claimed in any preceding claim,
said method comprising:-
applying an address pulse to a scan bus line structure (6), the address pulse having a stepped pulse waveform, which has a first voltage level Vgoff, provided during a period when the present scan bus line structure (6) is not addressed, a second voltage level Vgc, applied in temporal correspondence with addressing of a last precedingly addressed scan bus line structure (6), and a third voltage level Vgon for addressing the present scan bus line structure (6), wherein the voltage difference between the voltages Vgc and Vgoff is greater than the value of a peak-to-peak data voltage impressed on a data bus line less switch element threshold voltage.

14. A method as claimed in claim 13, further comprising application of data voltage pulses which maintain the same polarity during each frame period, with polarity reversed from one frame to the next.

15. A method as claimed in claim 13, comprising an application of data voltage pulses, which reverse polarity for each successively addressed scan bus line structure (6) in a frame, and reverse polarity, as applied to the same scan bus line structure (6), from frame to frame.

16. A method as claimed in claim 13, 14 or 15, wherein the second voltage level Vgc of an address pulse is selected as an intermediate voltage value between respective voltage levels at which an addressed display is driven to a display saturation level and to a display threshold level.

## Patentansprüche

1. Eine aktive Matrixanzeigeanordnung mit:
ersten (10) und zweiten (9) Substraten, die räumlich separat angeordnet sind und mit einer Vielzahl von Anzeigeelementen, die in einer Matrix angeordnet sind, ein Gehäuse bilden;
wobei das erste Substrat (10) Datenbusleitungen (7) hat, die auf seiner Innenseite gebildet sind, jede Datenbusleitung (7) ein Streifenmuster hat und eine Reihe von ersten Anzeigeelektroden für die Anzeigeelemente vorsieht;
das zweite Substrat (9) Scanbusleitungsstrukturen (6), die zu den Datenbusleitungen (7) transversal sind, Schaltelemente (1) und zweite Anzeigeelektroden (8) für die Anzeigeelemente hat, die auf seiner Innenseite gebildet sind;
jedes Schaltelement (1) eine Steuerelektrode (G) und zwei gesteuerte Elektroden (D, S) hat, wobei die Steuerelektrode (G) mit einer Scanbusleitungsstruktur (6) verbunden ist, die erste gesteuerte Elektrode (S) mit einer zweiten Anzeigeelektrode (8) verbunden ist, und die zweite gesteuerte Elektrode (D) mit einer Scanbusleitungsstruktur (6) verbunden ist, die an die genannte eine Scanbusleitungsstruktur angrenzt; und
die zweiten gesteuerten Elektroden (D) der Schaltelemente (1) entsprechende separate Verbindungen zu den Scanbusleitungsstrukturen (6) haben;
dadurch gekennzeichnet, daß
die Scanbusleitungsstrukturen (6) jeweils zwei Schichten umfassen, die entsprechend eine Scanbusleitung (11) und eine zusätzliche Busleitung (14) parallel zu der und angrenzend an die Scanbusleitung (11) vorsehen, wobei die zusätzliche Busleitung (14) mit der Scanbusleitung (11) in einem effektiven Anzeigebereich der Anzeigeanordnung gekoppelt ist.

2. Eine Anordnung nach Anspruch 1, bei der das Gehäuse Flüssigkristall enthält.

3. Eine Anordnung nach Anspruch 1, 2 oder 3, bei der in jeder Scanbusleitungsstruktur eine Isolierschicht (17), zum Beispiel aus Siliziumoxid oder Siliziumnitrid, auf jeder zusätzlichen Busleitung (14) gebildet ist und die Scanbusleitung (11) auf der Isolierschicht gebildet ist.

4. Eine Anordnung nach Anspruch 3, bei der die zusätzliche Busleitung (14) mit der relevanten Scanbusleitung (11) der Scanbusleitungsstruktur auf einer peripheren Zone des zweiten Substrats (9) verbunden ist.

5. Eine Anordnung nach Anspruch 1, 2 oder 3, bei der in jeder Scanbusleitungsstruktur jede zusätzliche Busleitung (14) wenigstens eine Verbindung zu der Scanbusleitung (11) für jedes Anzeigeelement längs jener Scanbusleitung hat.

6. Eine Anordnung nach einem der vorhergehenden Ansprüche, bei der die Verbindung der zweiten gesteuerten Elektrode (D) von jedem Schaltelement (1) zu einer Scanbusleitungsstruktur (6) durch einen Schichtwiderstand (20) erfolgt, der aus einem Material mit einem hohen spezifischen Schichtwiderstand, zum Beispiel Zinnoxid besteht.

7. Eine Anordnung nach Anspruch 6, bei der jeder Schichtwiderstand (20) einen Widerstand von mehr als dem Zehnfachen von jenem der Gesamtlänge einer Scanbusleitung (11) hat.

8. Eine Anordnung nach einem der vorhergehenden Ansprüche, bei der die Schaltelemente (1) Dünnfilmtransistoren sind, wovon jeder eine Gateelektrode (G) als Steuerelektrode, eine Sourceelektrode (S) als erste gesteuerte Elektrode und eine Drainelektrode (D) als zweite gesteuerte Elektrode hat.

9. Eine Anordnung nach einem der vorhergehenden Ansprüche, bei der die ersten und zweiten Anzeigeelektroden der Anzeigeelemente und Verbindungsleitungen zwischen ersten gesteuerten Elektroden und zweiten Anzeigeelektroden und zwischen zweiten gesteuerten Elektroden und Scanbusleitungsstrukturen dünne Filme aus transparentem und elektrisch leitendem Material, zum Beispiel Indiumzinnoxid sind.

10. Eine Anordnung nach einem der vorhergehenden Ansprüche, bei der die Scanbusleitungen (11) aus einer Metallschicht, zum Beispiel einer Aluminiumschicht sind.

11. Eine Anordnung nach einem der vorhergehenden Ansprüche, bei der ein Paar von Schaltelementen (1) in bezug auf jedes Anzeigeelement auf dem zweiten Substrat (9) vorgesehen ist, wobei die Steuerelektroden (G) des Paares der Schaltelemente mit der relevanten genannten einen Scanbusleitungsstruktur (6) über entsprechende Verbindungswiderstände (R) verbunden sind.

12. Eine Anordnung nach Anspruch 11, bei der die Steuerelektroden (G) von zwei Schaltelementen (1), die jeweils zu verschiedenen solcher Paare gehören, durch solch einen Verbindungswiderstand (R) mit einer Scanbusleitungsstruktur (6) gemeinsam verbunden sind.

13. Ein Verfahren zum Steuern einer aktiven Matrixanzeigeanordnung nach einem der vorhergehenden Ansprüche, mit den folgenden Schritten:
Zuführen eines Adreßimpulses zu einer Scanbusleitungsstruktur (6), welcher Adreßimpuls eine gestufte Impulswellenform und einen ersten Spannungspegel Vgoff hat, der während einer Periode vorgesehen ist, wenn die gegenwärtige Scanbusleitungsstruktur (6) nicht adressiert wird, einen zweiten Spannungspegel Vgc, der zeitlich übereinstimmend mit der Adressierung einer letzten, zuvor adressierten Scanbusleitungsstruktur (6) zugeführt wird, und einen dritten Spannungspegel Vgon zum Adressieren der gegenwärtigen Scanbusleitungsstruktur (6), bei dem die Spannungsdifferenz zwischen den Spannungen Vgc und Vgoff größer als der Wert einer Spitze-Spitze-Datenspannung, die einer Datenbusleitung zugeführt wird, abzüglich der Schwellenspannung des Schaltelementes ist.

14. Ein Verfahren nach Anspruch 13, das ferner ein Zuführen von Datenspannungsimpulsen umfaßt, die dieselbe Polarität während jeder Rahmenperiode beibehalten, wobei die Polarität von einem Rahmen zum nächsten umgekehrt wird.

15. Ein Verfahren nach Anspruch 13, das ein Zuführen von Datenspannungsimpulsen umfaßt, die für jede aufeinanderfolgend adressierte Scanbusleitungsstruktur (6) in einem Rahmen die Polarität umkehren, und die Polarität, wie sie derselben Scanbusleitungsstruktur (6) zugeführt wurde, von Rahmen zu Rahmen umkehren.

16. Ein Verfahren nach Anspruch 13, 14 oder 15, bei dem der zweite Spannungspegel Vgc eines Adreßimpulses als Zwischenspannungswert zwischen entsprechenden Spannungspegeln ausgewählt wird, bei denen eine adressierte Anzeige auf einen Anzeigesättigungspegel und auf einen Anzeigeschwellenpegel gesteuert wird.

## Revendications

1. Dispositif d'affichage à matrice active comprenant :
des premier (10) et second (9) substrats, espacés l'un de l'autre, qui forment une enceinte munie d'une pluralité d'éléments d'affichage agencés en matrice ;
le premier substrat (10) comportant des lignes de bus de données (7) formées dans sa surface interne, chacune des lignes de bus de données (7) comportant un motif de bande et constituant une série de premières électrodes d'affichage pour les éléments d'affichage ;
le second substrat (9) comportant des structures de ligne de bus de balayage (6) transversales aux lignes de bus de données (7), des éléments de commutation (1) et des secondes électrodes d'affichage (8) pour les éléments d'affichage, formés sur sa surface interne ;
chaque élément de commutation (1) comportant une électrode de commande (G) et deux électrodes commandées (D, S), l'électrode de commande (G) étant connectée à une structure de ligne de bus de balayage (6), la première électrode commandée (S) étant connectée à une seconde électrode d'affichage (8) et la seconde électrode commandée (D) étant connectée à une structure de ligne de bus de balayage (6) adjacente à ladite structure de ligne de bus de balayage considérée ; et
les secondes électrodes commandées (D) des éléments de commutation (1) comportant des connexions distinctes respectives sur les structures de ligne de bus de balayage (6),
caractérisé en ce que :
les structures de ligne de bus de balayage (6) comprennent chacune deux couches constituant respectivement une ligne de bus de balayage (11) et une ligne de bus supplémentaire (14) parallèle et adjacente à la ligne de bus de balayage (11), la ligne de bus supplémentaire (14) étant couplée à la ligne de bus de balayage (11) dans une zone d'affichage effective du dispositif d'affichage.

2. Dispositif selon la revendication 1, dans lequel l'enceinte inclut des cristaux liquides.

3. Dispositif selon l'une quelconque des revendications 1, 2 ou 3, dans lequel, dans chaque structure de ligne de bus de balayage, une couche isolante (17), par exemple en oxyde de silicium ou en nitrure de silicium, est formée sur chaque ligne de bus supplémentaire (14) et la ligne de bus de balayage (11) est formée sur la couche isolante.

4. Dispositif selon la revendication 3, dans lequel la ligne de bus supplémentaire (14) est connectée à la ligne de bus de balayage pertinente (11) de la structure de ligne de bus de balayage sur une région périphérique du second substrat (9).

5. Dispositif selon l'une quelconque des revendications 1, 2 ou 3, dans lequel, dans chaque structure de ligne de bus de balayage, chaque ligne de bus supplémentaire (14) comporte au moins une connexion sur la ligne de bus de balayage (11) pour chaque élément d'affichage le long de cette ligne de bus de balayage.

6. Dispositif selon l'une quelconque des revendications précédentes, dans lequel la connexion de la seconde électrode commandée (D) de chaque élément de commutation (1) sur une structure de ligne de bus de balayage (6) s'effectue au moyen d'une résistance en film (20) réalisée en un matériau à résistivité en feuille élevée, par exemple en oxyde d'étain.

7. Dispositif selon la revendication 6, dans lequel chaque résistance en film (20) présente une valeur de résistance supérieure à dix fois celle de la longueur totale d'une ligne de bus de balayage (11).

8. Dispositif selon l'une quelconque des revendications précédentes, dans lequel les éléments de commutation (1) sont des transistors à film mince dont chacun comporte une électrode de grille (G) en tant qu'électrode de commande, une électrode de source (S) en tant que première électrode commandée et une électrode de drain (D) en tant que seconde électrode commandée.

9. Dispositif selon l'une quelconque des revendications précédentes, dans lequel les première et seconde électrodes d'affichage des éléments d'affichage et des lignes de connexion entre des premières électrodes commandées et des secondes électrodes d'affichage ainsi qu'entre des secondes électrodes commandées et des structures de ligne de bus de balayage sont des films minces en un matériau électriquement conducteur transparent, par exemple de l'oxyde d'indium et d'étain.

10. Dispositif selon l'une quelconque des revendications précédentes, dans lequel les lignes de bus de balayage (11) sont en une couche de métal, par exemple une couche d'aluminium.

11. Dispositif selon l'une quelconque des revendications précédentes, dans lequel une paire d'éléments de commutation (1) sont prévus par rapport à chaque élément d'affichage, sur le second substrat (9), les électrodes de commande (G) de la paire d'éléments de commutation étant connectées sur ladite structure de ligne de bus de balayage pertinente (6) par l'intermédiaire de résistances de connexion respectives (R).

12. Dispositif selon la revendication 11, dans lequel les électrodes de commande (G) de deux éléments de commutation (1) appartenant à de telles paires respectives différentes sont connectées en commun au moyen d'une telle résistance de connexion (R) sur une structure de ligne de bus de balayage (6).

13. Procédé de commande d'un dispositif d'affichage à matrice active selon l'une quelconque des revendications précédentes, ledit procédé comprenant :
l'application d'une impulsion d'adresse à une structure de ligne de bus de balayage (6), l'impulsion d'adresse présentant une forme d'onde d'impulsions étagées qui présente un premier niveau de tension Vgoff produit pendant une période au cours de laquelle la structure de ligne de bus de balayage courante (6) n'est pas adressée, un second niveau de tension Vgc appliqué selon une correspondance temporelle par rapport à l'adressage d'une structure de ligne de bus de balayage adressée précédemment en dernier (6) et un troisième niveau de tension Vgon pour adresser la structure de ligne de bus de balayage courant (6), où la différence de tension entre les tensions Vgc et Vgoff est supérieure à la valeur d'une tension de données crête-à-crête imprimée sur une ligne de bus de données moins la tension de seuil de l'élément de commutation.

14. Procédé selon la revendication 13, comprenant en outre l'application d'impulsions de tension de données qui maintiennent la même polarité pendant chaque période d'image, la polarité étant inversée d'une image à la suivante.

15. Procédé selon la revendication 13, comprenant l'application d'impulsions de tension de données qui changent de polarité pour chaque structure de ligne de bus de balayage adressée successivement (6) dans une image et qui inversent les polarités appliquées à la même structure de ligne de bus de balayage (6) d'une image à l'autre.

16. Procédé selon l'une quelconque des revendications 13, 14 ou 15, dans lequel le second niveau de tension Vgc d'une impulsion d'adresse est sélectionné en tant que valeur de tension intermédiaire entre des niveaux de tension respectifs auxquels un affichage adressé est commandé à un niveau de saturation d'affichage et à un niveau de seuil d'affichage.
